(19)

**Europäisches Patentamt**
**European Patent Office**
**Office européen des brevets**

(11) **EP 4 675 970 A1**

(12) **EUROPEAN PATENT APPLICATION**

(43) Date of publication:
**07.01.2026 Bulletin 2026/02**

(21) Application number: **25186360.1**

(22) Date of filing: **30.06.2025**

(51) International Patent Classification (IPC):
**H04L 9/08** (2006.01)

(52) Cooperative Patent Classification (CPC):
**H04L 9/0852**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **01.07.2024 JP 2024106212**

(71) Applicant: **Kabushiki Kaisha Toshiba**
**Tokyo 105-0023 (JP)**

(72) Inventors:
• **ISHIGAKI, Yutaro**
**Tokyo (JP)**
• **DOI, Kazuaki**
**Tokyo (JP)**

(74) Representative: **Marks & Clerk LLP**
**15 Fetter Lane**
**London EC4A 1BW (GB)**

(54) **QUANTUM KEY DISTRIBUTION APPARATUS, QUANTUM KEY DISTRIBUTION METHOD, AND COMPUTER PROGRAM PRODUCT**

(57)    A quantum key distribution apparatus includes a processor implemented by at least one processing device. The processor generates input-vector-transformed data and random-number-transformed data by performing transform processing of transforming an input vector based on a photon received through a quantum channel and random number data based on a hash function into data in a frequency space. The processor stores the input-vector-transformed data and the random-number-transformed data in an external memory. The processor reads a portion of the input-vector-transformed data and a portion of the random-number-transformed data from the external memory into a local memory. The processor performs an element-wise multiplication-operation of the portion of the input-vector-transformed data and the portion of the random-number-transformed data and inverse-transform processing of an operation result of the element-wise multiplication-operation without accessing the external memory, and writes an intermediate result of the inverse-transform-processing to the external memory.

## FIG.1

## EP 4 675 970 A1

**Description**

FIELD

Arrangements described herein relate generally to a quantum key distribution apparatus, a quantum key distribution method, and computer program product.

BACKGROUND

A quantum cryptography technology, which is a technology for a quantum-encryption-utilized communication, is expected to be put into practical use as an encryption technology that cannot be decrypted even if the computing capabilities of computers is improved. In quantum cryptography, an informationally secure encryption key is shared between a transmitter and a receiver by quantum key distribution (QKD).

However, by the conventional techniques, it is difficult to reduce the amount of data transferred to and from an external memory in privacy amplification (PA) processing.

BRIEF DESCRIPTION OF THE DRAWINGS

Fig. 1 is a diagram illustrating an example of a functional configuration of a quantum key distribution apparatus according to a first arrangement;
Fig. 2 is a diagram for explaining an example of privacy amplification processing using a Toeplitz matrix according to the first arrangement;
Fig. 3 is a diagram for explaining an example of the privacy amplification processing using the Toeplitz matrix according to the first arrangement;
Fig. 4A is a first-half flowchart illustrating an example of the privacy amplification processing according to the first arrangement;
Fig. 4B is a second-half flowchart illustrating the example of the privacy amplification processing according to the first arrangement;
Fig. 5 is a diagram for explaining an example of processing in a six-step method in FFT or NTT;
Fig. 6 is a diagram for explaining a processing order of the six-step method in Fig. 5;
Fig. 7A is a diagram illustrating an example of first-half processing in a case where the six-step method is applied in the first arrangement;
Fig. 7B is a diagram illustrating an example of second-half processing in a case where the six-step method is applied in the first arrangement;
Fig. 8 is a diagram for explaining an example of processing in a case where the six-step method is applied to an inverse transform processing (first half) procedure in Fig. 4A;
Fig. 9A is a diagram for explaining an example of a method of dividing a Toeplitz matrix according to a second arrangement;
Fig. 9B is a diagram for explaining the example of the method of dividing the Toeplitz matrix according to the second arrangement;
Fig. 10 is a first-half flowchart illustrating an example of privacy amplification processing according to the second arrangement;
Fig. 11A is a diagram for explaining details of processing of the first-half flowchart of Fig. 10;
Fig. 11B is a diagram for explaining details of the processing of the first-half flowchart of Fig. 10;
Fig. 11C is a diagram for explaining details of the processing of the first-half flowchart of Fig. 10;
Fig. 12 is a diagram for explaining an example of an operation for MMH-MH according to a third arrangement;
Fig. 13 is a diagram illustrating an example of a calculation method in multiple precision multiplication using NTT according to the third arrangement;
Fig. 14A is a first-half flowchart illustrating an example of privacy amplification processing according to the third arrangement;
Fig. 14B is a second-half flowchart illustrating the example of the privacy amplification processing according to the third arrangement; and
Fig. 15 is a diagram illustrating an example of a hardware configuration of a quantum key distribution apparatus according to each of the first to third arrangements.

DETAILED DESCRIPTION

According to an arrangement, a quantum key distribution apparatus includes a processor. The processor is implemented by at least one processing device and configured to generate input vector transformed data and random number transformed data by performing transform processing of transforming an input vector based on a photon received through a quantum channel and random number data based on a hash function into data in a frequency space. The processor is configured to store the input vector transformed data and the random number transformed data in an external memory. The processor is configured to read a portion of the input vector transformed data and a portion of the random number transformed data from the external memory into a local memory. The processor is configured to perform an element-wise multiplication operation of the portion of the input vector transformed data and the portion of the random number transformed data and inverse transform processing of an operation result of the element-wise multiplication operation without accessing the external memory, and write an intermediate result of the inverse transform processing to the external memory.

Hereinafter, arrangements of a quantum key distribution apparatus, a quantum key distribution method, and computer program product will be described in detail with reference to the accompanying drawings. The present disclosure is not limited to the following arrangements.

In quantum key distribution, privacy amplification processing using a hash function such as a Toeplitz matrix is performed to obtain final encryption key data. Since there is a finite size effect described in "M. Lucamarini, K. A. Patel, J. F. Dynes, B. Frohlich, A. W. Sharpe, A. R. Dixon, Z. L. Yuan, R. V. Penty, and A. J. Shields, "Efficient decoy-state quantum key distribution with quantified security", Opt. Express 21, 24550-24565 (2013)", privacy amplification processing for large-scale input data is required to achieve a high key generation speed.

In the case of a hash function using a Toeplitz matrix which is general in privacy amplification processing, multiplication of the Toeplitz matrix and vector data after error correction is performed. In this case, an operation reduction method using transform processing of transforming the data into data in a frequency space can be applied. For example, fast Fourier transform (FFT) or number theoretic transform (NTT) is used as the transform processing.

Since privacy amplification processing is performed on large-scale input data as described above, the number of points in FFT or NTT is also large. Hereinafter, FFT or NTT is referred to as FFT/NTT.

For example, in a case where input data of 100 Mbits is supported, 134,217,728 points in FFT/NTT are required, and in a case where performing transform processing is performed in 32 bits, data of 4 Gbits is required only for the input data. It is not realistic to hold all such large-scale data in a local memory (for example, a cache memory (static random access memory (SRAM)) close to a processor). Therefore, the data is generally held in an external memory (dynamic random access memory (DRAM)) and transferred between the local memory and the external memory during calculation.

As described above, normally, data required for FFT/NTT is held in the external memory, but transfer of enormous data is required between the external memory and the local memory. Therefore, in a system in which a data transfer bandwidth between the external memory and the processor is not sufficient, this data transfer becomes a bottleneck, and there is a problem that an arithmetic unit of the processor cannot be efficiently operated and processing performance decreases.

First Arrangement

First, an example of a functional configuration of a quantum key distribution apparatus 1 according to a first arrangement will be described.

Example of Functional Configuration

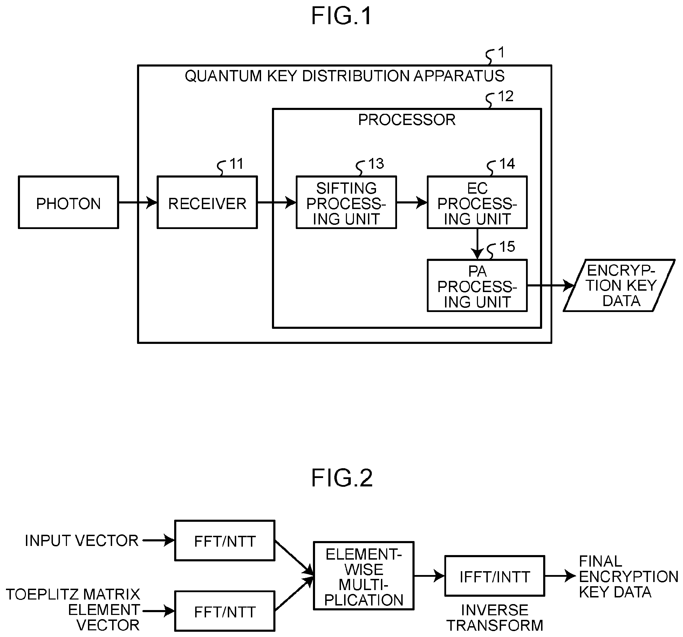

Fig. 1 is a diagram illustrating the example of the functional configuration of the quantum key distribution apparatus 1 according to the first arrangement. The quantum key distribution apparatus 1 according to the first arrangement includes a receiver 11 and a processor 12. The processor 12 includes a sifting processing unit 13, an error correction (EC) processing unit 14, and a privacy amplification (PA) processing unit 15.

The receiver 11 receives a photon from a quantum channel and inputs the photon to the processor 12.

The processor 12 is implemented by at least one processing device, and executes processing of the quantum key distribution apparatus 1. This processing device includes, for example, a control device and an arithmetic device, and is implemented by an analog or digital circuit or the like. The processing device may be a central processing unit (CPU), or may be a general-purpose processor, a microprocessor, a digital signal processor (DSP), an application specific integrated circuit (ASIC), a field-programmable gate array (FPGA), or a combination thereof.

The sifting processing unit 13 performs sift processing of acquiring sifted key data by referring to photon data in units of predetermined bit strings using a reference basis randomly selected from a plurality of bases.

The EC processing unit 14 corrects an error included in the sifted key data and generates input data to be input to the PA processing unit 15.

The PA processing unit 15 performs privacy amplification processing on the input data input from the EC processing unit 14. In the privacy amplification processing in the first arrangement, a Toeplitz matrix is used for a hash function, and an element-wise multiplication operation and inverse transform processing using a result of the operation are performed without access to the external memory.

Note that, in the example illustrated in Fig. 1, the processor 12 includes the sifting processing unit 13, the EC processing unit 14, and the PA processing unit 15, but the processor 12 may implement only the PA processing unit 15. In this case, processing of the sifting processing unit 13 and the EC processing unit 14 is implemented by, for example, another processing unit outside the processor 12.

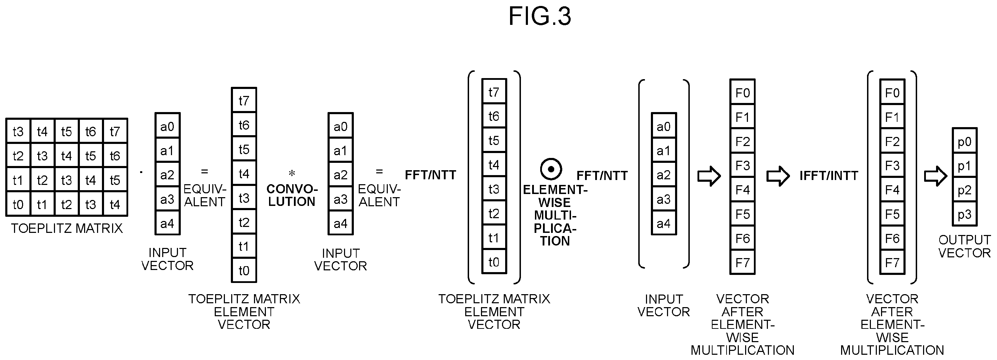

Figs. 2 and 3 are diagrams for explaining an example of the privacy amplification processing using the Toeplitz matrix in the first arrangement. In the privacy amplification processing using the Toeplitz matrix, as illustrated in Fig. 2, final encryption key data is obtained by multiplication of the Toeplitz matrix and an input vector.

The Toeplitz matrix used in the privacy amplification processing is a random number matrix, but as illustrated in Fig. 3, the Toeplitz matrix has a characteristic that the same value appears in the lower right. By using this characteristic, a Toeplitz matrix element vector including some of elements of the Toeplitz matrix can be used as random number data. Specifically, multiplication of the Toeplitz matrix and the input vector can be expressed by a convolution operation of a random number vector (Toeplitz matrix element vector) obtained by collecting unique values in the first row and the first column of the Toeplitz matrix and the input vector.

In this convolution operation, the operation amount is generally reduced by FFT/NTT. As a processing method, FFT/NTT is performed on each of the input vector and the Toeplitz matrix element vector, and each of the input vector and the Toeplitz matrix element vector is transformed into data in a frequency space.

Hereinafter, the data in the frequency space into which the Toeplitz matrix element vector is transformed is referred to as "Toeplitz matrix transformed data". The data in the frequency space into which the input vector is transformed is referred to as "input vector transformed data".

The Toeplitz matrix transformed data and the input vector transformed data are multiplied (element-wise multiplication) for each of the elements, and inverse transform processing (inverse fast Fourier transform (IFFT)/inverse number theoretic transform (INTT)) is performed on a vector after the element-wise multiplication. As a result, an operation equivalent to the multiplication of the original Toeplitz matrix and the input vector can be performed, and the final encryption key data is obtained.

Example of Privacy Amplification Processing

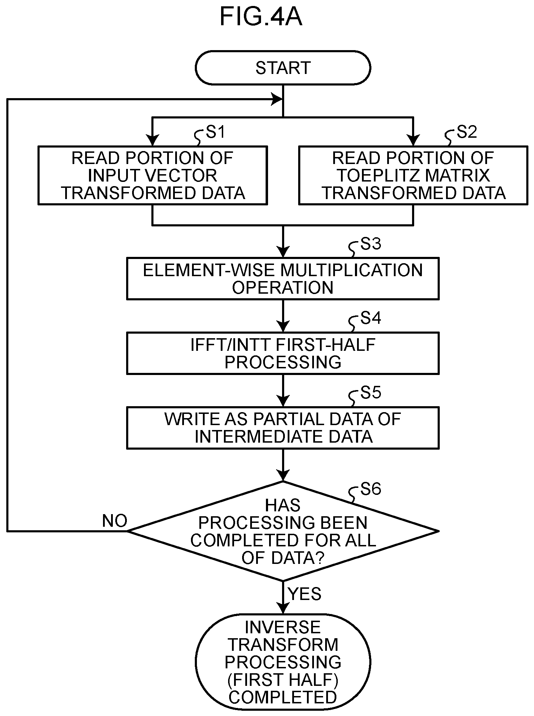

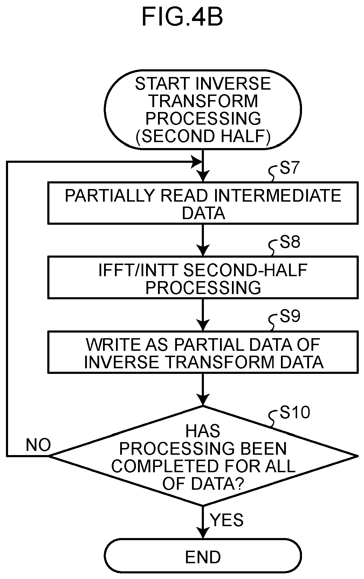

Fig. 4A is a first-half flowchart illustrating an example of the privacy amplification processing according to the first arrangement. Fig. 4B is a second-half flowchart illustrating the example of the privacy amplification processing according to the first arrangement.

In the example illustrated in Figs. 4A and 4B, the inverse transform processing (IFFT/INTT) of FFT/NTT in the privacy amplification processing is divided into the first half and the second half. The processor 12 writes intermediate data to the external memory when the first half of the inverse transform processing is completed, and reads the intermediate data from the external memory into the local memory at the start of the second half of the inverse transform processing.

First, the processor 12 reads partial data indicating a portion of the input vector transformed data and partial data indicating a portion of the Toeplitz matrix transformed data into the local memory (steps S1 and S2).

Next, the processor 12 performs the element-wise multiplication operation and the first half of the inverse transform processing on the partial data read in steps S1 and S2 (steps S3 and S4), and then writes the partial data as partial data of the intermediate data (step S5).

The processor 12 repeats steps S1 to S6. After the operation is performed on all of the data (the input vector transformed data and the Toeplitz matrix transformed data) (step S6, Yes), the intermediate data is partially read again in the next step S7, the second half of the inverse transform processing is partially performed (steps S8 to S10), and the element-wise multiplication and the inverse transform processing are completed.

As illustrated in Figs. 4A and 4B, the processor 12 generates encryption key data from the input vector transformed data and the random number transformed data by repeating an element-wise multiplication operation of partial data indicating a portion of the input vector transformed data and partial data indicating a portion of the random number transformed data and inverse transform processing of an operation result of the element-wise multiplication operation.

In this case, the reading and writing of the partial data require access to the external memory, but no access to the external memory is performed between the element-wise multiplication operation (step S3) and the IFFT/INTT first-half processing (step S4).

In order to improve the key generation rate, it is necessary to increase the size of FFT/NTT in the privacy amplification processing, and thus the memory access efficiency decreases. In this case, a method for improving the memory access efficiency, such as the six-step method described in "D. H. Bailey, "FFTs in External or Hierarchical Memory", Journal of Supercomputing, Vol.4, No.1, 1990" can be applied.

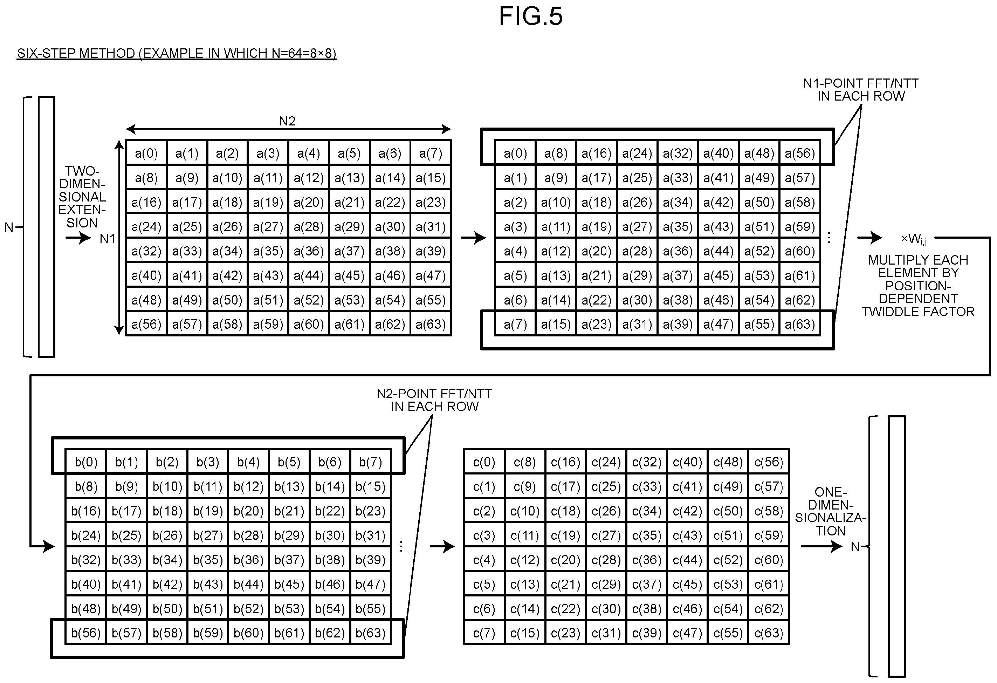

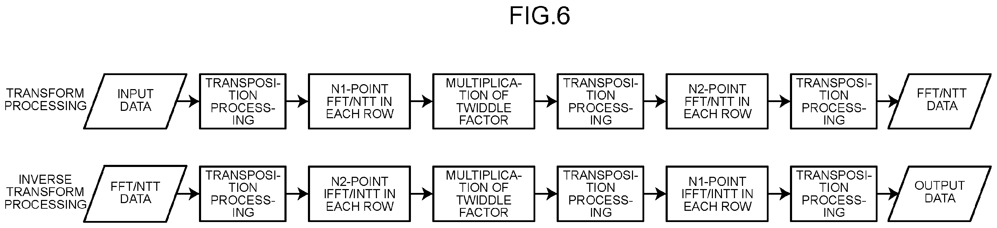

Fig. 5 is a diagram for explaining an example of processing in the six-step method in FFT or NTT. Fig. 6 is a diagram for explaining a processing order of the six-step method in Fig. 5.

In the six-step method, when the number of points in FFT/NTT is N, vector data is two-dimensionally extended to $N = N1 \times N2$ as illustrated in Fig. 5. That is, in a case where the six-step method is applied, the processor 12 two-dimensionally arranges the input vector and the Toeplitz matrix element vector described above, and performs FFT/NTT processing.

Then, in the transform processing, as illustrated in Fig. 6, transposition processing is first performed on the two-dimensionally extended input data. Subsequently, after N1-point FFT/NTT is performed in each row, each piece of twiddle factor data depending on each data position is multiplied, and the transposition processing is performed again. Further, by performing the transposition processing after performing N2-point FFT/NTT on each row, an operation equivalent to N-point FFT/NTT can be performed.

Also in the inverse transform (IFFT/INTT), a processing method is similar to the above-described transform processing except that N1 and N2 are reversed.

Note that, in the privacy amplification processing, since it is redundant to transpose data most recently transposed in the transform processing again at the beginning of the inverse transform processing, the transposition processing may be omitted.

In quantum cryptography which is a quantum-encryption-utilized communication, the encryption key data is a random number, and the order of the data is not limited as long as the same rule is followed by a transmitter and a receiver. Therefore, although not equivalent to the original operation, the first transposition processing in the transform processing and the last transposition processing in the inverse transform processing may also be omitted.

In the above-described six-step method, since the number N of points in FFT/NTT is generally a very large value (for example, 134,217,728), it is not realistic to store all of the data in the local memory due to the data size required for the processing. Therefore, in the first arrangement, the transform processing and the inverse transform processing in a case where the six-step method is applied are divided into the first half and the second half, and data is partially read and the processing is performed.

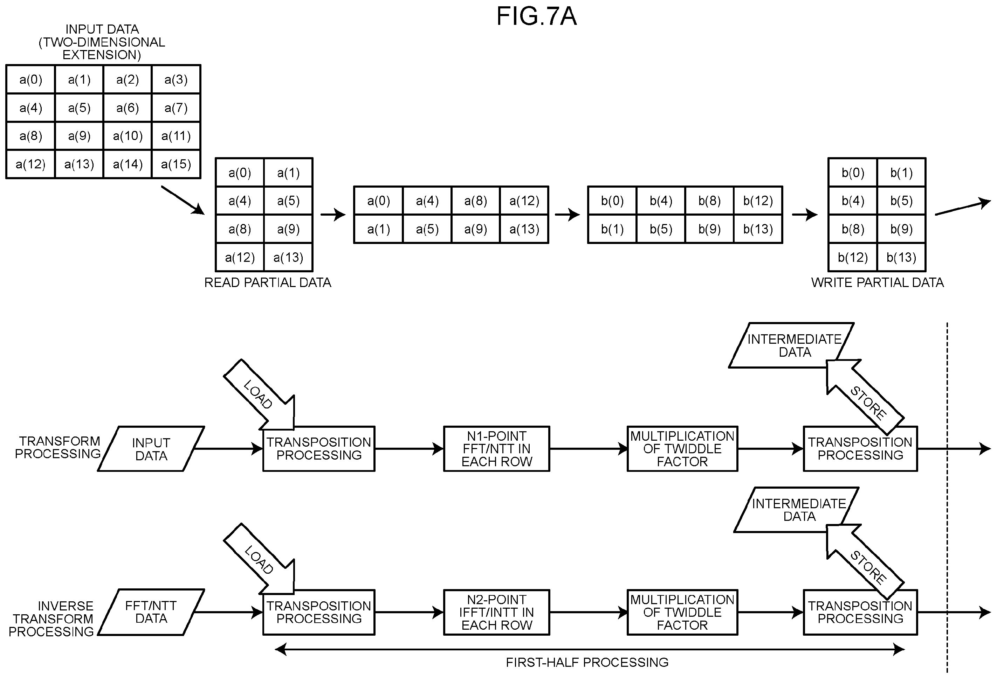

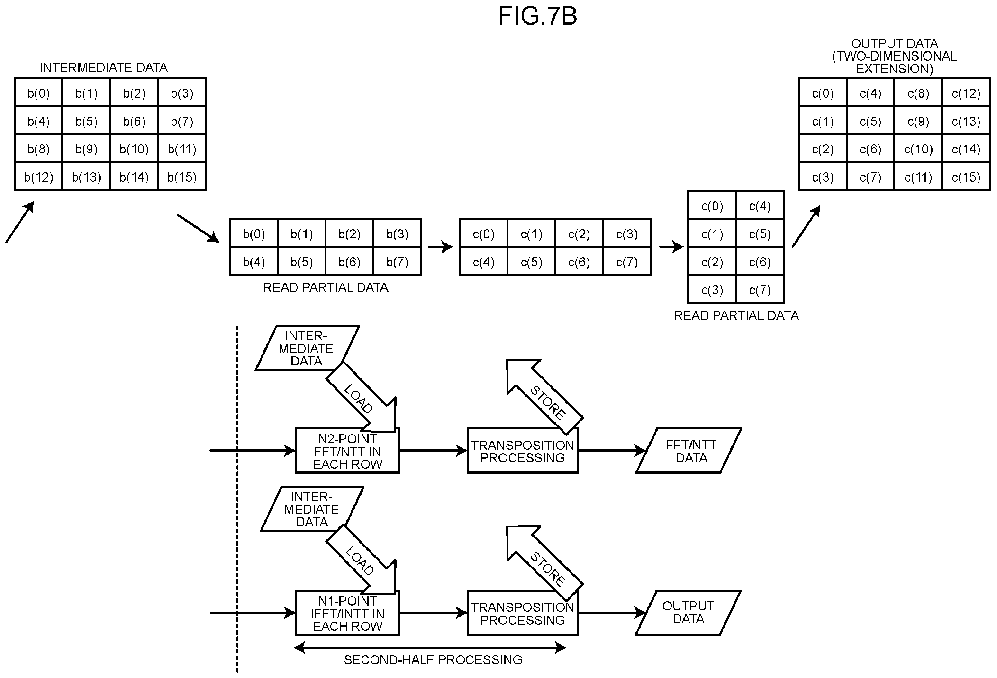

Figs. 7A and 7B are diagrams illustrating examples of the first-half processing and the second-half processing in a case where the six-step method is applied in the first arrangement. Taking the six-step method as an example, the processing is divided into processing up to the second transposition processing as the first half and processing after the second transposition processing as the second half as illustrated in Figs. 7A and 7B due to dependency of data accessed in the processing. The external memory is accessed at the start and end of the first-half processing, and is accessed at the start and end of the second-half processing.

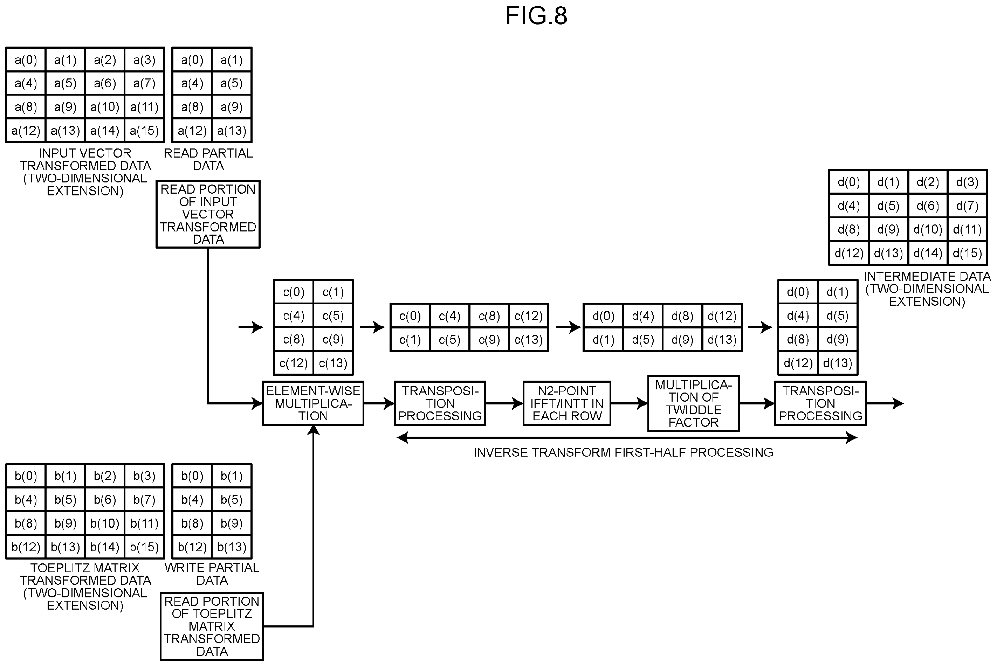

Fig. 8 is a diagram for explaining an example of processing in a case where the six-step method is applied to the inverse transform processing (first half) procedure in Fig. 4A. In the example illustrated in Fig. 8, the processor 12 partially reads, from the external memory, the input vector transformed data and the Toeplitz matrix transformed data in an amount that can be stored in the local memory. Then, the processor 12 performs the element-wise multiplication and the inverse transform first-half processing on the partially read input vector transformed data and the partially read Toeplitz matrix transformed data, and writes the result (intermediate data) to the external memory.

In this case, since access to the external memory is not required between the element-wise multiplication operation and the inverse transform processing (first half), the amount of data transferred to and from the external memory can be reduced.

Then, the processor 12 partially reads the intermediate data again in the next step and performs the inverse transform processing (second half), and the privacy amplification processing is completed.

As described above, the quantum key distribution apparatus 1 according to the first arrangement includes the processor 12. The processor 12 generates input vector transformed data and random number transformed data by performing transform processing of transforming an input vector based on a photon received through the quantum channel and random number data based on a hash function into data in a frequency space. The processor 12 stores the input vector transformed data and the random number transformed data in the external memory. The processor 12 reads a portion of the input vector transformed data and a portion of the random number transformed data from the external memory into the local memory. The processor 12 performs an element-wise multiplication operation of the portion of the input vector transformed data and the portion of the random number transformed data and inverse transform processing of an operation result of the element-wise multiplication operation without accessing the external memory, and writes an intermediate result of the inverse transform processing to the external memory.

According to the first arrangement, the amount of data transferred to and from the external memory can be reduced in the privacy amplification processing. Specifically, in the first arrangement, the amount of data transferred to and from the external memory can be reduced by omitting access to the external memory between the element-wise multiplication operation and the inverse transform processing (first half).

Note that the first arrangement can also be applied to the modified Toeplitz matrix described in "M. Hayashi, "Exponential Decreasing Rate of Leaked Information in Universal Random Privacy", IEEE Transactions on Information Theory, Vol.57, 2011". The modified Toeplitz matrix can be calculated using FFT/NTT smaller than a normal Toeplitz matrix in a method of performing privacy amplification processing using a matrix obtained by combining a unit matrix and a Toeplitz matrix. Therefore, in a case where the modified Toeplitz matrix is applied, the amount of calculation and the amount of data transferred are generally reduced.

Even in a case where the modified Toeplitz matrix is used, the processor 12 can reduce the amount of data transferred to and from the external memory by partially reading modified Toeplitz matrix transformed data and omitting access to the external memory between the element-wise multiplication operation and the inverse transform processing (first half).

According to the first arrangement, the amount of data transferred to and from the external memory can be reduced by about 22%. In addition, by combining with the modified Toeplitz matrix described in "M. Hayashi, "Exponential Decreasing Rate of Leaked Information in Universal Random Privacy", IEEE Transactions on Information Theory, Vol.57, 2011", the amount of data transferred to and from the external memory can be reduced by about 45%.

As a result, in a system in which a bandwidth for data transfer to and from the external memory is a bottleneck, processing performance can be improved according to an amount by which data transferred is reduced. For example, if transferred data is reduced to about 1/2, the performance can be improved by approximately 2 times according to the scale of the reduction.

Second Arrangement

Next, a second arrangement will be described. In the description of the second arrangement, a description similar to that in the first arrangement will be omitted, and features different from those in the first arrangement will be described.

In privacy amplification processing in the second arrangement, a Toeplitz matrix is used for a hash function. In the second arrangement, an element-wise multiplication operation and inverse transform processing using a result of the operation are performed without access to the external memory, and Toeplitz matrix transformed data read from the external memory is stored in the local memory and reused.

In the second arrangement, the Toeplitz matrix is divided and processed, but by doing so, the number of points in FFT/NTT can be reduced. However, when the number of divisions is increased, the effect of reducing the operation amount by a butterfly operation is reduced. Therefore, it is necessary to limit the number of divisions in order to obtain a certain effect of reducing the operation amount, and even after the division, relatively large data is obtained.

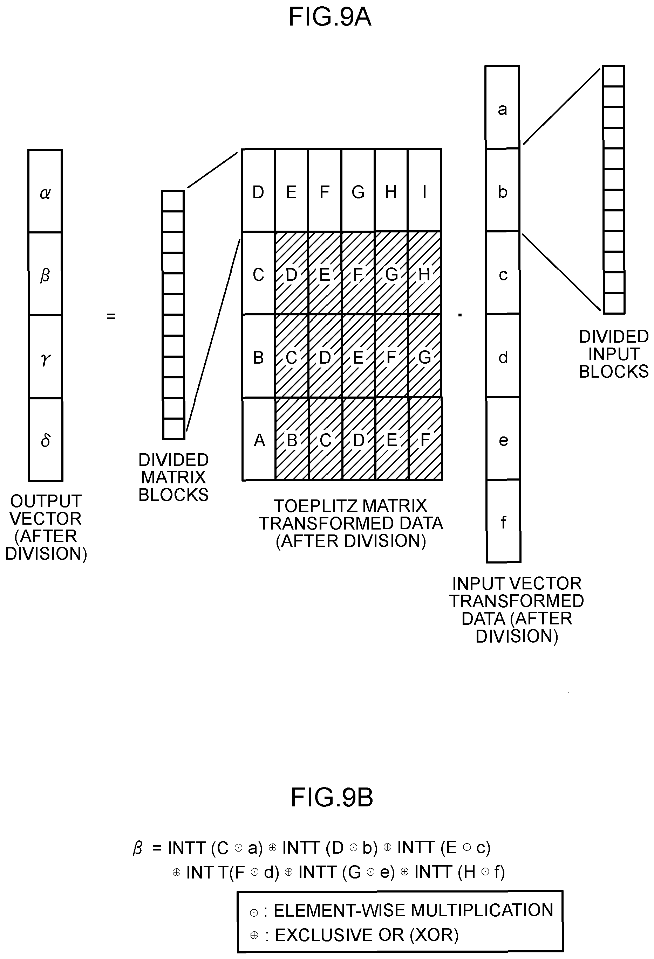

Figs. 9A and 9B are diagrams for explaining an example of a method of dividing the Toeplitz matrix according to the second arrangement.

The Toeplitz matrix has a characteristic that the same value appears in the lower right element, and has a characteristic that the same matrix appears in the lower right for divided matrices. Furthermore, since data obtained by transforming them by FFT/NTT has the same characteristic, transformed data of matrices A to I at the left end and the upper end can be reused in the matrices divided as illustrated in Fig. 9A.

When executing the privacy amplification processing using the Toeplitz matrices divided as illustrated in Fig. 9A, the processor 12 calculates a divided block $\beta$ of an output vector as illustrated in Fig. 9B, for example.

A method of calculating divided blocks $\alpha$, y, and $\delta$ of the output vector is also similar to the method of calculating the divided block $\beta$. That is, the processor 12 first performs element-wise multiplication/inverse transform processing on corresponding divided blocks for divided blocks of the Toeplitz matrix transformed data and divided blocks of the input vector transformed data. Then, the processor 12 calculates an output vector of the divided blocks by performing exclusive OR on a vector (binary data) indicating a result of the element-wise multiplication/inverse transform processing.

As described above, since the same data appears in a right downward direction in the Toeplitz matrix, when processing is performed while changing an input data block such that the divided matrices are accessed in the right downward direction, the Toeplitz matrix transformed data can be reused.

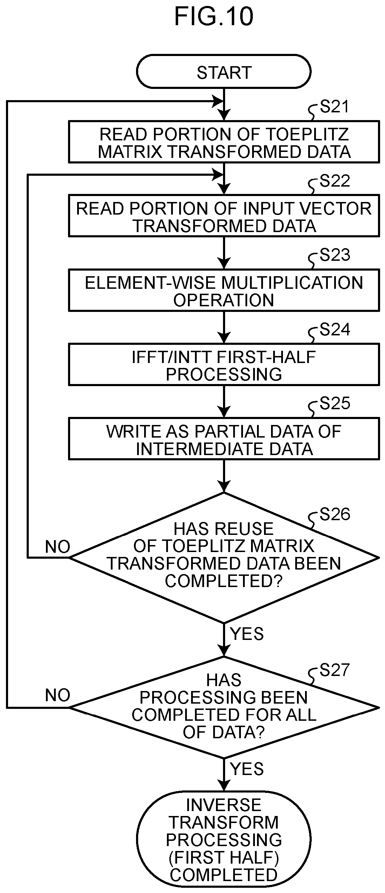

Fig. 10 is a first-half flowchart illustrating an example of the privacy amplification processing according to the second arrangement. The first-half flowchart of Fig. 10 includes the element-wise multiplication operation and the first half of the inverse transform processing.

First, the processor 12 reads a portion of partial data (divided matrix block) of the Toeplitz matrix transformed data from the external memory and stores the read portion in the local memory (step S21).

Next, the processor 12 reads a portion of partial data (divided input block) of the input vector transformed data in a divided area corresponding to the portion of the partial data read in step S21 from the external memory, and stores the read portion in the local memory (step S22).

Next, the processor 12 performs an element-wise multiplication operation of the portion of the divided matrix block and the portion of the divided input block and the first half of the inverse transform processing using a result of the operation without accessing the external memory (steps S23 and S24).

Next, the processor 12 writes data obtained by the processing in steps S23 and S24 to the external memory as partial data of intermediate data (step S25).

Next, the processor 12 determines whether or not the reuse of the Toeplitz matrix transformed data has been completed (step S26).

In a case where the reuse of the Toeplitz matrix transformed data has not been completed (step S26, No), that is, in a case where the portion of the divided matrix block read in step S21 can be reused for the processing in steps S23 and S24, the processor 12 returns to the processing in step S22.

In a case where the Toeplitz matrix transformed data is reused, the processing in steps S22 to S25 is performed while the portion of the divided matrix block read in step S21 is held in the local memory.

In a case where the reuse of the Toeplitz matrix transformed data has been completed (step S26, Yes), the processor 12 determines whether or not the processing has been completed for all of the data (all of the Toeplitz matrix transformed data) (step S27).

In a case where the processing has not been completed for all of the data (step S27, No), the processing returns to step S21. In a case where the processing has been completed for all of the data (step S27, Yes), the first half of the inverse transform processing ends.

As described above, the processor 12 repeats the processing in steps S22 to S25 until the partial data of the Toeplitz matrix transformed data read into the local memory cannot be reused. Then, the next partial data of the Toeplitz matrix transformed data is read, similar processing is repeated, and when calculation of all of the data is completed, the first half of the inverse transform processing is completed.

By performing the processing, each piece of the partial data of the Toeplitz matrix transformed data only needs to be read from the external memory into the local memory only once, and thus access to the external memory can be reduced. Furthermore, as in the first arrangement, access to the external memory can be omitted from the element-wise multiplication operation to the inverse transform first-half processing (steps S23 and S24).

The second-half flowchart of the privacy amplification processing according to the second arrangement is similar to that according to the first arrangement, and thus a description thereof is omitted. However, since the intermediate data is generated for the number of divisions of the Toeplitz matrix, similar processing is performed on each piece of the intermediate data.

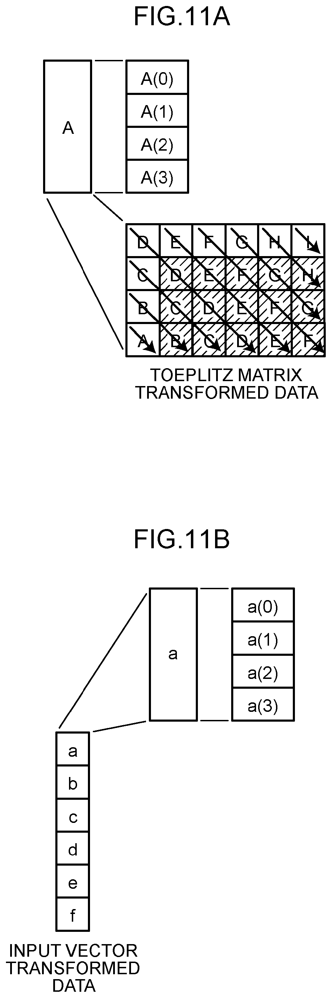

Figs. 11A to 11C are diagrams for explaining details of the processing of the first half flowchart of Fig. 10.

Fig. 11A illustrates an example in which partial data (divided matrix block A) of the Toeplitz matrix transformed data is further divided into A(0) to A(3). Each of A(0) to A(3) is a vector having a plurality of elements.

Note that, in the example in Fig. 11A, the divided matrix block A is illustrated, but the same applies to the divided matrix blocks B to I.

Fig. 11B illustrates an example in which partial data (divided input block a) of the input vector transformed data is further divided into a(0) to a(3). Each of a(0) to a(3) is a vector having a plurality of elements.

Note that, in the example illustrated in Fig. 11B, the divided input block a is illustrated, but the same applies to divided matrix blocks b to f.

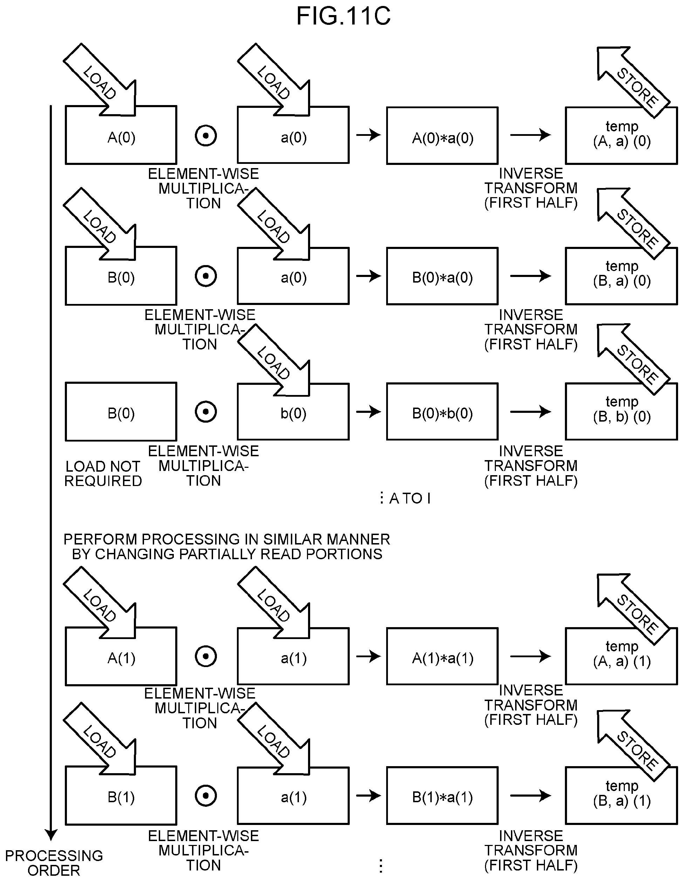

As illustrated in Fig. 11C, first, the processor 12 reads A(0) from the external memory into the local memory, then reads a(0) from the external memory into the local memory, and performs the element-wise multiplication operation. Next, the processor 12 performs the first half of the inverse transform processing and writes a portion (temp(A, a) (0)) of intermediate data to the external memory.

Since the divided matrix block A cannot be reused, the processor 12 subsequently reads a portion B(0) of the divided matrix block B and reads the corresponding a(0). Then, after performing the element-wise multiplication operation of B(0) and a(0) and the first half of the inverse transform processing of a result of the operation, the processor 12 writes a portion (temp(B, a) (0)) of the intermediate data to the external memory.

In the next step, since B(0) can be reused, the processor 12 reads b(0) corresponding to B(0), similarly performs the element-wise multiplication operation/inverse transform processing, and writes a portion (temp(B, b) (0)) of the intermediate data.

The processor 12 repeats the processing until the entire area of the Toeplitz matrix transformed data is accessed, and obtains intermediate data. In this method, the external memory needs to have a capacity enough to store the intermediate data corresponding to the number of divisions of the Toeplitz matrix.

Thereafter, the processor 12 reads the intermediate data stored in the external memory into the local memory, performs the processing of the second half of the inverse transform processing on each piece of the data, and performs exclusive OR on the result of the processing for the corresponding data. As a result, in the divided Toeplitz matrix, the amount of data transferred from and to the external memory can be reduced while taking advantage of the characteristics.

In the example illustrated in Figs. 11A to 11C, the Toeplitz matrix transformed data is read in the order of A(0), B(0), C(0),..., A(1), B(1), C(1),..., but similar effects can be obtained by reading the Toeplitz matrix transformed data in the order of A(0), A(1), A(2),..., B(0), B(1), B(2),.....

As described above, in the second arrangement, the processor 12 divides the input vector transformed data into the plurality of divided input blocks and divides the Toeplitz matrix transformed data into the plurality of divided matrix blocks. Then, the processor 12 reads a divided input block as a portion of the input vector transformed data from the external memory into the local memory, and reads a divided matrix block as a portion of the Toeplitz matrix transformed data from the external memory into the local memory.

According to the second arrangement, by reusing the Toeplitz matrix transformed data and omitting access to the external memory between the element-wise multiplication and the inverse transform processing (first half), the amount of data transferred to and from the external memory can be reduced.

Similarly to the first arrangement, the second arrangement can be applied to the modified Toeplitz matrix described in "M. Hayashi, "Exponential Decreasing Rate of Leaked Information in Universal Random Privacy", IEEE Transactions on Information Theory, Vol.57, 2011", and the amount of data transferred to and from the external memory can be further reduced.

According to the second arrangement, the amount of data transferred to and from the external memory can be reduced by about 30%. In addition, by combining with the modified Toeplitz matrix described in "M. Hayashi, "Exponential Decreasing Rate of Leaked Information in Universal Random Privacy", IEEE Transactions on Information Theory, Vol.57, 2011", the amount of data transferred to and from the external memory can be reduced by about 50%.

Third Arrangement

Next, a third arrangement will be described. In the description of the third arrangement, a description similar to that in the first arrangement will be omitted, and features different from those in the first arrangement will be described.

In privacy amplification processing in the third arrangement, a hash function other than a Toeplitz matrix is used. In the third arrangement, a case where a hash calculation method that is described in "B. Yan, et al., "An efficient hybrid hash based privacy amplification algorithm for quantum key distribution.", Quantum Inf Process 21, 130 (2022)" and is referred to as MMH-MH is used will be described as an example. The MMH-MH is a hybrid hash function obtained by combining two hash functions of multi-linear modular hashing (MMH) and modular arithmetic hashing (MH).

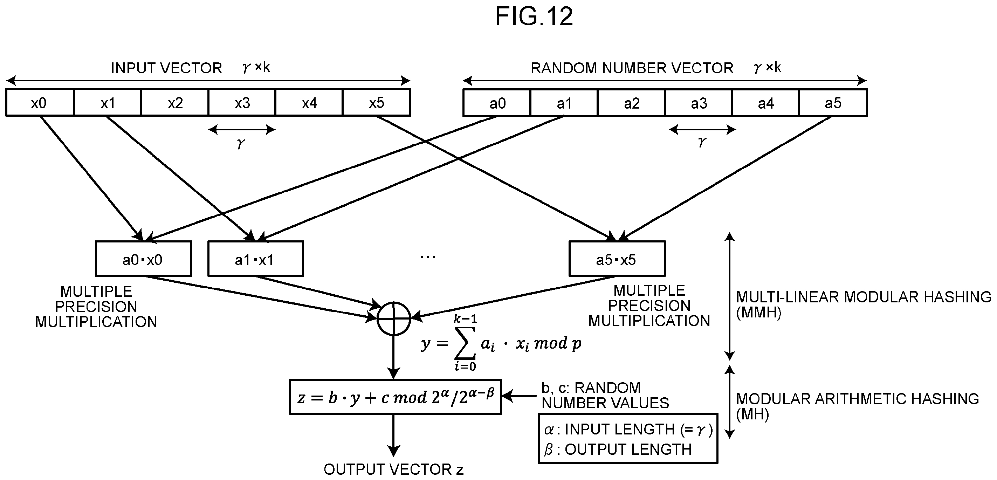

Fig. 12 is a diagram for explaining an example of an operation for the MMH-MH according to the third arrangement. As illustrated in Fig. 12, first, the processor 12 performs MMH processing. Specifically, the processor 12 divides an input vector and a random number vector into each input vector with a size (y) and each random number vector with a size (y), multiplies the divided input vector by the divided random number vector, and sums results of the multiplication using a remainder ring modulo a prime number p. Since the size (y) takes a large value, this multiplication is usually multiple precision multiplication. The processor 12 outputs a hash value y having a fixed length y by the MMH processing.

Thereafter, the processor 12 generates an output vector z by calculating variable length data from data of the fixed length y in calculation of MH.

FFT/NTT can be used to efficiently perform multiple precision multiplication of MMH. Multiple precision data of N digits can be expressed by a polynomial as in the following equation (1) when expressed in B-ary system (B is an arbitrary integer of 2 or more).

$$X = x_{N-1}B^{N-1} + x_{N-2}B^{N-2} + \cdots + x_2 B^2 + x_1 B^1 + x_0$$

$$= \sum_{n=0}^{N-1} x_n B^n \qquad \cdots (1)$$

It is known that polynomial multiplication is a convolution operation of coefficient vectors when coefficients are put together as vectors. By performing the convolution operation using FFT/NTT, the amount of calculation can be reduced from $O(N^2)$ to $O(N \cdot \log(N))$, and thus the calculation can be efficiently performed in the convolution operation.

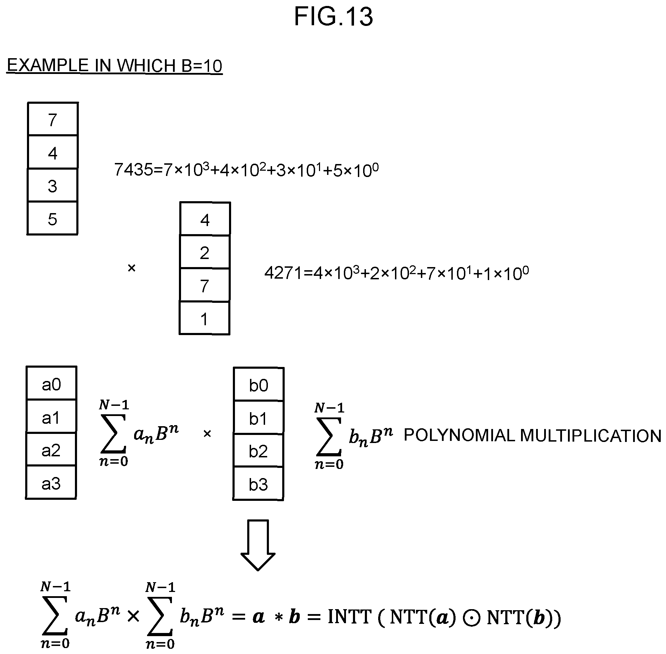

Fig. 13 is a diagram illustrating an example of a calculation method in multiple precision multiplication using NTT according to the third arrangement. When calculation is performed using NTT in the polynomial multiplication in the third arrangement, the calculation method is as illustrated in Fig. 13. First, the processor 12 transforms each coefficient vector into a frequency space using NTT, and performs an element-wise multiplication operation on each piece of the transformed data. The processor 12 performs an operation equivalent to the original convolution operation by inversely transforming (INTT) a result of the operation.

Although Fig. 13 illustrates the case where NTT is used, the same applies to FFT.

In order to obtain more encryption key data after the privacy amplification processing (that is, to improve the encryption key generation rate), it is necessary to increase the above-described data size (y), but the number of points in FFT/NTT increases according to the data size (y). Therefore, it is not realistic to store all of data necessary for the calculation in the local memory.

For example, in "W. Li, et al., "High-rate quantum key distribution exceeding 110 Mb s-1", Nature Photonics,17, 416-421 (2023)", $\gamma$ = 57,885,161, and it is necessary to perform FFT/NTT with a number of points (67,108,864 in this example because it is necessary to be a power of 2) equal to or greater than this size, so that the amount of data required in FFT/NTT is enormous. Therefore, it is realistic to store data necessary for the calculation in the external memory and perform processing while reading data of a size that can be read into the local memory.

In the third arrangement, similarly to the first arrangement, the element-wise multiplication operation and the inverse transform processing using a result of the operation are performed without access to the external memory.

Example of Privacy Amplification Processing

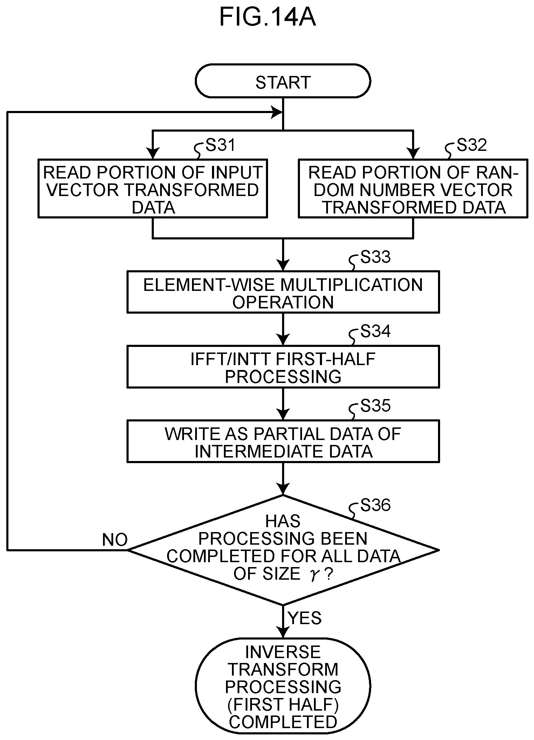

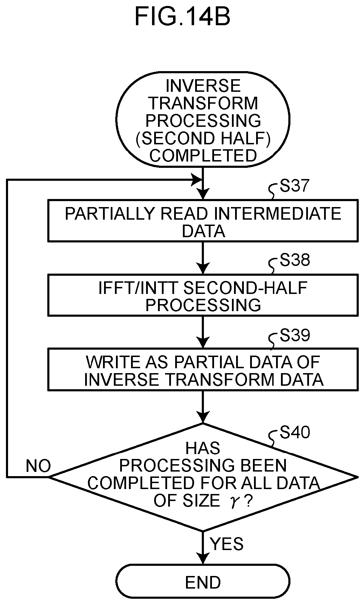

Fig. 14A is a first-half flowchart illustrating an example of the privacy amplification processing according to the third arrangement. Fig. 14B is a second-half flowchart illustrating the example of the privacy amplification processing according to the third arrangement.

Figs. 14A and 14B illustrate a processing example in a case where calculation is performed using FFT/NTT in multiple precision multiplication in the MMH processing. Similarly to the first and second arrangements, the inverse transform processing is divided into the first half and the second half.

First, the processor 12 reads partial data indicating a portion of the input vector transformed data and partial data indicating a portion of the random number vector transformed data into the local memory (steps S31 and S32). In this case, the portion of the input vector transformed data is data obtained by transforming the input vector divided by the size y by FFT/NTT. The portion of the random number vector transformed data is data obtained by transforming the random number vector divided by the size y by FFT/NTT.

Since the processing in steps S33 to S35 is similar to the processing in steps S3 to S5 according to the first arrangement, a description thereof will be omitted.

The processor 12 repeats steps S31 to S36. When the operation is performed on all of the transformed data of the size y (step S36, Yes), the intermediate data is partially read again in the next step S37, the second half of the inverse transform processing is performed (steps S38 to S40), and the element-wise multiplication and the inverse transform processing are completed.

As illustrated in Figs. 14A and 14B, also in the third arrangement, the element-wise multiplication operation is performed using the partial data, and the first half of the inverse transform processing is performed using a result of the operation. Then, by writing the result as the intermediate data to the external memory, it is possible to reduce access to the external memory access from the element-wise multiplication operation (step S33) to the IFFT/INTT first-half processing (step S34).

As described above, even in a case where a hash function that is referred to as MMH-MH and different from the Toeplitz matrix is used, the amount of data transferred to and from the external memory can be reduced by omitting access to the external memory between the element-wise multiplication and the inverse transform processing (first half).

Lastly, an example of a hardware configuration of the quantum key distribution apparatus 1 according to each of the first to third arrangements will be described.

Example of Hardware Configuration

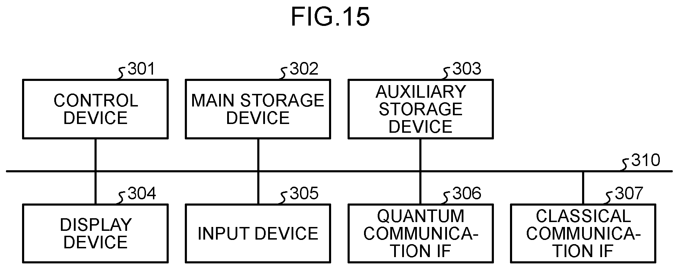

Fig. 15 is a diagram illustrating the example of the hardware configuration of the quantum key distribution apparatus 1 according to each of the first to third arrangements. The quantum key distribution apparatus 1 according to each of the first to third arrangements includes a control device 301, a main storage device 302, an auxiliary storage device 303, a display device 304, an input device 305, a quantum communication interface (IF) 306, and a classical communication IF 307.

The control device 301, the main storage device 302, the auxiliary storage device 303, the display device 304, the input device 305, the quantum communication IF 306, and the classical communication IF 307 are connected via a bus 310.

The control device 301 (processor) executes a program read from the auxiliary storage device 303 into the main storage device 302. In addition, the control device 301 includes the local memory (for example, a cache memory such as an SRAM).

The main storage device 302 is the external memory such as a DRAM. The auxiliary storage device 303 is a hard disk drive (HDD), a memory card, or the like.

The display device 304 displays the state and the like of the quantum key distribution apparatus 1. The input device 305 receives an input from a user. Note that the display device 304 and the input device 305 may be implemented by a touch panel or the like having a display function and an input function. In addition, the display device 304 and the input device 305 may not be provided in the quantum key distribution apparatus 1. In this case, for example, a display function and an input function of an external terminal connected to the quantum key distribution apparatus 1 are used.

The quantum communication IF 306 is an interface for connecting to the quantum channel through which a photon is transmitted. The classical communication IF 307 is an interface for connecting to a transmission channel through which a control signal or the like is transmitted.

The program that is executed by the quantum key distribution apparatus 1 according to each of the first to third arrangements is stored in a computer-readable storage medium such as a CD-ROM, a memory card, a CD-R, or a digital versatile disc (DVD) as a file in an installable format or an executable format, and is provided as a computer program product.

In addition, the program that is executed by the quantum key distribution apparatus 1 according to each of the first to third arrangements may be stored on a computer connected to a network such as the Internet and provided by being downloaded via the network.

In addition, the program that is executed by the quantum key distribution apparatus 1 according to each of the first to third arrangements may be provided via a network such as the Internet without being downloaded.

In addition, the program that is executed by the quantum key distribution apparatus 1 according to each of the first to third arrangements may be provided by being incorporated in a ROM or the like in advance.

The program that is executed by the quantum key distribution apparatus 1 according to each of the first to third arrangements has a module configuration including a function that is included in the functional configuration of the quantum key distribution apparatus 1 and can be implemented by the program. The control device 301 reads the program from a storage medium such as the auxiliary storage device 303 and executes the program, whereby the function implemented by the program is loaded into the main storage device 302. That is, the function implemented by the program is generated on the main storage device 302.

Note that some or all of the functions of the quantum key distribution apparatus 1 according to each of the first to third arrangements may be implemented by hardware such as an integrated circuit (IC). The IC is, for example, a processor that executes dedicated processing.

In addition, in a case where each of the functions is implemented by using a plurality of processors, each of the processors may implement one of the functions or may implement two or more of the functions.

Example 1. According to an arrangement, a quantum key distribution apparatus (1) includes a processor (12). The processor (12) is implemented by at least one processing device and configured to generate input vector transformed data and random number transformed data by performing transform processing of transforming an input vector based on a photon received through a quantum channel and random number data based on a hash function into data in a frequency space. The processor (12) is configured to store the input vector transformed data and the random number transformed data in an external memory. The processor (12) is configured to read a portion of the input vector transformed data and a portion of the random number transformed data from the external memory into a local memory. The processor (12) is configured to perform an element-wise multiplication operation of the portion of the input vector transformed data and the portion of the random number transformed data and inverse transform processing of an operation result of the element-wise multiplication operation without accessing the external memory, and write an intermediate result of the inverse transform processing to the external memory.

Example 2. In the quantum key distribution apparatus (1) according to example 1, the transform processing is fast Fourier transform or number theoretic transform.

Example 3. In the quantum key distribution apparatus (1) according to example 1 or 2, encryption key data is generated from the input vector transformed data and the random number transformed data by repeating the element-wise multiplication operation of the portion of the input vector transformed data and the portion of the random number transformed data and the inverse transform processing of the operation result of the element-wise multiplication operation.

Example 4. In the quantum key distribution apparatus (1) according to example 1 or 2, the inverse transform processing is divided into a first half and a second half, and the processor (12) writes the intermediate result to the external memory when the first half of the inverse transform processing is completed, and reads the intermediate result from the external memory into the local memory at a start of the second half of the inverse transform processing.

Example 5. In the quantum key distribution apparatus (1) according to example 1 or 2, the hash function is a Toeplitz matrix, and the random number data is a Toeplitz matrix element vector including some of elements of the Toeplitz matrix.

Example 6. In the quantum key distribution apparatus (1) according to example 1 or 2, the hash function is a Toeplitz matrix, and the processor (12) generates a Toeplitz matrix element vector including some of elements of the Toeplitz matrix, and generates the random number data by two-dimensionally arranging the Toeplitz matrix element vector.

Example 7. In the quantum key distribution apparatus (1) according to example 1 or 2, the hash function is a Toeplitz matrix, and the processor (12) divides the input vector transformed data into a plurality of divided input blocks, divides the random number transformed data into a plurality of divided matrix blocks, and reads a divided input block from the external memory into the local memory as a portion of the input vector transformed data, and reads a divided matrix block into the local memory as a portion of the random number transformed data.

Example 8. In the quantum key distribution apparatus (1) according to example 1 or 2, the processor (12) is implemented by a hardware processor, and the local memory is a cache memory of the processor.

Example 9. According to an arrangement, a quantum key distribution method is implemented by a quantum key distribution apparatus (1). The method includes generating input vector transformed data and random number transformed data by performing transform processing of transforming an input vector based on a photon received through a quantum channel and random number data based on a hash function into data in a frequency space; storing the input vector transformed data and the random number transformed data in an external memory; reading a portion of the input vector transformed data and a portion of the random number transformed data from the external memory into a local memory; and performing an element-wise multiplication operation of the portion of the input vector transformed data and the portion of the random number transformed data and inverse transform processing of an operation result of the element-wise multiplication operation without accessing the external memory, and writing an intermediate result of the inverse transform processing to the external memory.

Example 10. According to an arrangement, a computer program product has a computer readable medium including instructions stored thereon. When executed by a quantum key distribution apparatus (1), the instructions cause the computer to execute generating input vector transformed data and random number transformed data by performing transform processing of transforming an input vector based on a photon received through a quantum channel and random number data based on a hash function into data in a frequency space; storing the input vector transformed data and the random number transformed data in an external memory; reading a portion of the input vector transformed data and a portion of the random number transformed data from the external memory into a local memory; and performing an element-wise multiplication operation of the portion of the input vector transformed data and the portion of the random number transformed data and inverse transform processing of an operation result of the element-wise multiplication operation without accessing the external memory, and writing an intermediate result of the inverse transform processing to the external memory.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

**Claims**

1. A quantum key distribution apparatus (1) comprising:
   a processor (12) implemented by at least one processing device and configured to:

   generate input vector transformed data and random number transformed data by performing transform processing of transforming an input vector based on a photon received through a quantum channel and random number data based on a hash function into data in a frequency space;
   store the input vector transformed data and the random number transformed data in an external memory;
   read a portion of the input vector transformed data and a portion of the random number transformed data from the external memory into a local memory; and
   perform an element-wise multiplication operation of the portion of the input vector transformed data and the portion of the random number transformed data and inverse transform processing of an operation result of the element-wise multiplication operation without accessing the external memory, and write an intermediate result of the inverse transform processing to the external memory.

2. The quantum key distribution apparatus (1) according to claim 1, wherein
   the transform processing is fast Fourier transform or number theoretic transform.

3. The quantum key distribution apparatus (1) according to claim 1 or 2, wherein
   encryption key data is generated from the input vector transformed data and the random number transformed data by repeating the element-wise multiplication operation of the portion of the input vector transformed data and the portion of the random number transformed data and the inverse transform processing of the operation result of the element-wise multiplication operation.

4. The quantum key distribution apparatus (1) according to claim 1 or 2, wherein

the inverse transform processing is divided into a first half and a second half, and
the processor (12) writes the intermediate result to the external memory when the first half of the inverse transform processing is completed, and reads the intermediate result from the external memory into the local memory at a start of the second half of the inverse transform processing.

5. The quantum key distribution apparatus (1) according to claim 1 or 2, wherein

   the hash function is a Toeplitz matrix, and
   the random number data is a Toeplitz matrix element vector including some of elements of the Toeplitz matrix.

6. The quantum key distribution apparatus (1) according to claim 1 or 2, wherein

   the hash function is a Toeplitz matrix, and
   the processor (12) generates a Toeplitz matrix element vector including some of elements of the Toeplitz matrix, and generates the random number data by two-dimensionally arranging the Toeplitz matrix element vector.

7. The quantum key distribution apparatus (1) according to claim 1 or 2, wherein

   the hash function is a Toeplitz matrix, and
   the processor (12)
   divides the input vector transformed data into a plurality of divided input blocks, divides the random number transformed data into a plurality of divided matrix blocks, and
   reads a divided input block from the external memory into the local memory as a portion of the input vector transformed data, and reads a divided matrix block into the local memory as a portion of the random number transformed data.

8. The quantum key distribution apparatus (1) according to claim 1 or 2, wherein

   the processor (12) is implemented by a hardware processor, and
   the local memory is a cache memory of the processor.

9. A quantum key distribution method implemented by a quantum key distribution apparatus (1), the method comprising:

   generating input vector transformed data and random number transformed data by performing transform processing of transforming an input vector based on a photon received through a quantum channel and random number data based on a hash function into data in a frequency space;
   storing the input vector transformed data and the random number transformed data in an external memory;
   reading a portion of the input vector transformed data and a portion of the random number transformed data from the external memory into a local memory; and
   performing an element-wise multiplication operation of the portion of the input vector transformed data and the portion of the random number transformed data and inverse transform processing of an operation result of the element-wise multiplication operation without accessing the external memory, and writing an intermediate result of the inverse transform processing to the external memory.

10. A computer program product having a computer readable medium including instructions stored thereon, wherein the instructions, when executed by a quantum key distribution apparatus (1), cause the computer to execute:

    generating input vector transformed data and random number transformed data by performing transform processing of transforming an input vector based on a photon received through a quantum channel and random number data based on a hash function into data in a frequency space;
    storing the input vector transformed data and the random number transformed data in an external memory;
    reading a portion of the input vector transformed data and a portion of the random number transformed data from the external memory into a local memory; and
    performing an element-wise multiplication operation of the portion of the input vector transformed data and the portion of the random number transformed data and inverse transform processing of an operation result of the element-wise multiplication operation without accessing the external memory, and writing an intermediate result of the inverse transform processing to the external memory.

## FIG.1

QUANTUM KEY DISTRIBUTION APPARATUS — 1

PROCESSOR — 12

PHOTON → RECEIVER — 11 → SIFTING PROCESS-ING UNIT — 13 → EC PROCESS-ING UNIT — 14 → PA PROCESS-ING UNIT — 15 → ENCRYP-TION KEY DATA

## FIG.2

INPUT VECTOR → FFT/NTT

TOEPLITZ MATRIX ELEMENT VECTOR → FFT/NTT

→ ELEMENT-WISE MULTI-PLICATION → IFFT/INTT → FINAL ENCRYPTION KEY DATA

INVERSE TRANSFORM

# FIG.3

EP 4 675 970 A1

# FIG.4A

START

READ PORTION OF
INPUT VECTOR
TRANSFORMED DATA ⌐S1

READ PORTION OF
TOEPLITZ MATRIX
TRANSFORMED DATA ⌐S2

ELEMENT-WISE MULTIPLICATION
OPERATION ⌐S3

IFFT/INTT FIRST-HALF
PROCESSING ⌐S4

WRITE AS PARTIAL DATA OF
INTERMEDIATE DATA ⌐S5

HAS
PROCESSING BEEN
COMPLETED FOR ALL
OF DATA? ⌐S6

NO

YES

INVERSE
TRANSFORM
PROCESSING
(FIRST HALF)
COMPLETED

# FIG.4B

START INVERSE
TRANSFORM
PROCESSING
(SECOND HALF)

S7

PARTIALLY READ INTERMEDIATE
DATA

S8

IFFT/INTT SECOND-HALF
PROCESSING

S9

WRITE AS PARTIAL DATA OF
INVERSE TRANSFORM DATA

S10

HAS
PROCESSING BEEN
COMPLETED FOR ALL
OF DATA?

NO

YES

END

## FIG.5

SIX-STEP METHOD (EXAMPLE IN WHICH N=64=8×8)

N1-POINT FFT/NTT
IN EACH ROW

N2

TWO-DIMEN-SIONAL EXTEN-SION

N → N1

| a(0) | a(1) | a(2) | a(3) | a(4) | a(5) | a(6) | a(7) |
| a(8) | a(9) | a(10) | a(11) | a(12) | a(13) | a(14) | a(15) |
| a(16) | a(17) | a(18) | a(19) | a(20) | a(21) | a(22) | a(23) |
| a(24) | a(25) | a(26) | a(27) | a(28) | a(29) | a(30) | a(31) |
| a(32) | a(33) | a(34) | a(35) | a(36) | a(37) | a(38) | a(39) |
| a(40) | a(41) | a(42) | a(43) | a(44) | a(45) | a(46) | a(47) |
| a(48) | a(49) | a(50) | a(51) | a(52) | a(53) | a(54) | a(55) |
| a(56) | a(57) | a(58) | a(59) | a(60) | a(61) | a(62) | a(63) |

| a(0) | a(8) | a(16) | a(24) | a(32) | a(40) | a(48) | a(56) |
| a(1) | a(9) | a(17) | a(25) | a(33) | a(41) | a(49) | a(57) |
| a(2) | a(10) | a(18) | a(26) | a(34) | a(42) | a(50) | a(58) |
| a(3) | a(11) | a(19) | a(27) | a(35) | a(43) | a(51) | a(59) |
| a(4) | a(12) | a(20) | a(28) | a(36) | a(44) | a(52) | a(60) |
| a(5) | a(13) | a(21) | a(29) | a(37) | a(45) | a(53) | a(61) |
| a(6) | a(14) | a(22) | a(30) | a(38) | a(46) | a(54) | a(62) |
| a(7) | a(15) | a(23) | a(31) | a(39) | a(47) | a(55) | a(63) |

$\times W_{i,j}$

MULTIPLY EACH ELEMENT BY POSITION-DEPENDENT TWIDDLE FACTOR

N2-POINT FFT/NTT
IN EACH ROW

| b(0) | b(1) | b(2) | b(3) | b(4) | b(5) | b(6) | b(7) |
| b(8) | b(9) | b(10) | b(11) | b(12) | b(13) | b(14) | b(15) |
| b(16) | b(17) | b(18) | b(19) | b(20) | b(21) | b(22) | b(23) |
| b(24) | b(25) | b(26) | b(27) | b(28) | b(29) | b(30) | b(31) |
| b(32) | b(33) | b(34) | b(35) | b(36) | b(37) | b(38) | b(39) |
| b(40) | b(41) | b(42) | b(43) | b(44) | b(45) | b(46) | b(47) |
| b(48) | b(49) | b(50) | b(51) | b(52) | b(53) | b(54) | b(55) |
| b(56) | b(57) | b(58) | b(59) | b(60) | b(61) | b(62) | b(63) |

| c(0) | c(8) | c(16) | c(24) | c(32) | c(40) | c(48) | c(56) |
| c(1) | c(9) | c(17) | c(25) | c(33) | c(41) | c(49) | c(57) |
| c(2) | c(10) | c(18) | c(26) | c(34) | c(42) | c(50) | c(58) |
| c(3) | c(11) | c(19) | c(27) | c(35) | c(43) | c(51) | c(59) |
| c(4) | c(12) | c(20) | c(28) | c(36) | c(44) | c(52) | c(60) |
| c(5) | c(13) | c(21) | c(29) | c(37) | c(45) | c(53) | c(61) |
| c(6) | c(14) | c(22) | c(30) | c(38) | c(46) | c(54) | c(62) |
| c(7) | c(15) | c(23) | c(31) | c(39) | c(47) | c(55) | c(63) |

ONE-DIMEN-SIONALIZA-TION

→ N

EP 4 675 970 A1

FIG.6

TRANSFORM PROCESSING

INPUT DATA → TRANSPOSITION PROCESSING → N1-POINT FFT/NTT IN EACH ROW → MULTIPLICATION OF TWIDDLE FACTOR → TRANSPOSITION PROCESSING → N2-POINT FFT/NTT IN EACH ROW → TRANSPOSITION PROCESSING → FFT/NTT DATA

INVERSE TRANSFORM PROCESSING

FFT/NTT DATA → TRANSPOSITION PROCESSING → N2-POINT IFFT/INTT IN EACH ROW → MULTIPLICATION OF TWIDDLE FACTOR → TRANSPOSITION PROCESSING → N1-POINT IFFT/INTT IN EACH ROW → TRANSPOSITION PROCESSING → OUTPUT DATA

# FIG.7A

INPUT DATA
(TWO-DIMENSIONAL
EXTENSION)

| a(0) | a(1) | a(2) | a(3) |
|------|------|------|------|
| a(4) | a(5) | a(6) | a(7) |
| a(8) | a(9) | a(10) | a(11) |
| a(12) | a(13) | a(14) | a(15) |

| a(0) | a(1) |
|------|------|
| a(4) | a(5) |
| a(8) | a(9) |
| a(12) | a(13) |

READ PARTIAL DATA

| a(0) | a(4) | a(8) | a(12) |
|------|------|------|-------|
| a(1) | a(5) | a(9) | a(13) |

| b(0) | b(4) | b(8) | b(12) |
|------|------|------|-------|
| b(1) | b(5) | b(9) | b(13) |

| b(0) | b(1) |
|------|------|
| b(4) | b(5) |
| b(8) | b(9) |
| b(12) | b(13) |

WRITE PARTIAL DATA

TRANSFORM PROCESSING → INPUT DATA → LOAD → TRANSPOSITION PROCESSING → N1-POINT FFT/NTT IN EACH ROW → MULTIPLICATION OF TWIDDLE FACTOR → TRANSPOSITION PROCESSING → STORE → INTERMEDIATE DATA

INVERSE TRANSFORM PROCESSING → FFT/NTT DATA → LOAD → TRANSPOSITION PROCESSING → N2-POINT IFFT/INTT IN EACH ROW → MULTIPLICATION OF TWIDDLE FACTOR → TRANSPOSITION PROCESSING → STORE → INTERMEDIATE DATA

FIRST-HALF PROCESSING

EP 4 675 970 A1

# FIG.7B

INTERMEDIATE DATA

| b(0) | b(1) | b(2) | b(3) |
|------|------|------|------|
| b(4) | b(5) | b(6) | b(7) |
| b(8) | b(9) | b(10) | b(11) |
| b(12) | b(13) | b(14) | b(15) |

OUTPUT DATA
(TWO-DIMENSIONAL
EXTENSION)

| c(0) | c(4) | c(8) | c(12) |
|------|------|------|------|
| c(1) | c(5) | c(9) | c(13) |
| c(2) | c(6) | c(10) | c(14) |
| c(3) | c(7) | c(11) | c(15) |

READ PARTIAL DATA

| b(0) | b(1) | b(2) | b(3) |
|------|------|------|------|
| b(4) | b(5) | b(6) | b(7) |

| c(0) | c(1) | c(2) | c(3) |
|------|------|------|------|
| c(4) | c(5) | c(6) | c(7) |

| c(0) | c(4) |
|------|------|
| c(1) | c(5) |
| c(2) | c(6) |
| c(3) | c(7) |

READ PARTIAL DATA

INTER-MEDIATE DATA

LOAD

N2-POINT FFT/NTT IN EACH ROW

STORE

TRANSPOSITION PROCESSING

FFT/NTT DATA

INTER-MEDIATE DATA

LOAD

N1-POINT IFFT/INTT IN EACH ROW

STORE

TRANSPOSITION PROCESSING

OUTPUT DATA

SECOND-HALF PROCESSING

EP 4 675 970 A1

# FIG.8

| | | | |
|---|---|---|---|
| a(0) | a(1) | a(2) | a(3) |
| a(4) | a(5) | a(6) | a(7) |
| a(8) | a(9) | a(10) | a(11) |
| a(12) | a(13) | a(14) | a(15) |

INPUT VECTOR
TRANSFORMED DATA
(TWO-DIMENSIONAL
EXTENSION)

| | |
|---|---|
| a(0) | a(1) |
| a(4) | a(5) |
| a(8) | a(9) |
| a(12) | a(13) |

READ PARTIAL
DATA

READ PORTION
OF INPUT
VECTOR
TRANSFORMED
DATA

| | | | |
|---|---|---|---|
| d(0) | d(1) | d(2) | d(3) |
| d(4) | d(5) | d(6) | d(7) |
| d(8) | d(9) | d(10) | d(11) |
| d(12) | d(13) | d(14) | d(15) |

INTERMEDIATE DATA
(TWO-DIMENSIONAL
EXTENSION)

| | |
|---|---|
| c(0) | c(1) |
| c(4) | c(5) |
| c(8) | c(9) |
| c(12) | c(13) |

| | | | |
|---|---|---|---|
| c(0) | c(4) | c(8) | c(12) |
| c(1) | c(5) | c(9) | c(13) |

| | | | |
|---|---|---|---|
| d(0) | d(4) | d(8) | d(12) |
| d(1) | d(5) | d(9) | d(13) |

| | |
|---|---|
| d(0) | d(1) |
| d(4) | d(5) |
| d(8) | d(9) |
| d(12) | d(13) |

ELEMENT-WISE
MULTIPLICA-
TION

TRANSPOSI-
TION
PROCESSING

N2-POINT
IFFT/INTT IN
EACH ROW

MULTIPLICA-
TION OF
TWIDDLE
FACTOR

TRANSPOSI-
TION
PROCESSING

INVERSE TRANSFORM FIRST-HALF PROCESSING

| | | | |
|---|---|---|---|
| b(0) | b(1) | b(2) | b(3) |
| b(4) | b(5) | b(6) | b(7) |
| b(8) | b(9) | b(10) | b(11) |
| b(12) | b(13) | b(14) | b(15) |

TOEPLITZ MATRIX
TRANSFORMED DATA
(TWO-DIMENSIONAL
EXTENSION)

| | |
|---|---|
| b(0) | b(1) |
| b(4) | b(5) |
| b(8) | b(9) |
| b(12) | b(13) |

WRITE PARTIAL
DATA

READ PORTION
OF TOEPLITZ
MATRIX
TRANSFORMED
DATA

EP 4 675 970 A1

# FIG.9A

OUTPUT
VECTOR
(AFTER
DIVISION)

DIVIDED
MATRIX
BLOCKS

TOEPLITZ MATRIX
TRANSFORMED DATA
(AFTER DIVISION)

INPUT VECTOR
TRANSFORMED
DATA (AFTER
DIVISION)

DIVIDED
INPUT
BLOCKS

# FIG.9B

$\beta$ = INTT (C $\odot$ a) $\oplus$ INTT (D $\odot$ b) $\oplus$ INTT (E $\odot$ c)
$\oplus$ INT T(F $\odot$ d) $\oplus$ INTT (G $\odot$ e) $\oplus$ INTT (H $\odot$ f)

| $\odot$ : ELEMENT-WISE MULTIPLICATION |
| $\oplus$ : EXCLUSIVE OR (XOR) |

# FIG.10

START

S21
READ PORTION OF TOEPLITZ MATRIX TRANSFORMED DATA

S22
READ PORTION OF INPUT VECTOR TRANSFORMED DATA

S23
ELEMENT-WISE MULTIPLICATION OPERATION

S24
IFFT/INTT FIRST-HALF PROCESSING

S25
WRITE AS PARTIAL DATA OF INTERMEDIATE DATA

S26
HAS REUSE OF TOEPLITZ MATRIX TRANSFORMED DATA BEEN COMPLETED?
NO
YES

S27
HAS PROCESSING BEEN COMPLETED FOR ALL OF DATA?
NO
YES

INVERSE TRANSFORM PROCESSING (FIRST HALF) COMPLETED

# FIG.11A

| | A(0) |
| A | A(1) |
| | A(2) |
| | A(3) |

TOEPLITZ MATRIX
TRANSFORMED DATA

# FIG.11B

| | a(0) |
| a | a(1) |
| | a(2) |
| | a(3) |

INPUT VECTOR
TRANSFORMED
DATA

# FIG.11C

LOAD

A(0) ⊙ LOAD a(0) → A(0)*a(0) → STORE temp (A, a) (0)

ELEMENT-WISE MULTIPLICA-TION

INVERSE TRANSFORM (FIRST HALF)

LOAD B(0) ⊙ LOAD a(0) → B(0)*a(0) → STORE temp (B, a) (0)

ELEMENT-WISE MULTIPLICA-TION

INVERSE TRANSFORM (FIRST HALF)

B(0) ⊙ LOAD b(0) → B(0)*b(0) → STORE temp (B, b) (0)

LOAD NOT REQUIRED    ELEMENT-WISE MULTIPLICA-TION

INVERSE TRANSFORM (FIRST HALF)

: A TO I

PERFORM PROCESSING IN SIMILAR MANNER BY CHANGING PARTIALLY READ PORTIONS

LOAD A(1) ⊙ LOAD a(1) → A(1)*a(1) → STORE temp (A, a) (1)

ELEMENT-WISE MULTIPLICA-TION

INVERSE TRANSFORM (FIRST HALF)

LOAD B(1) ⊙ LOAD a(1) → B(1)*a(1) → STORE temp (B, a) (1)

PROCESSING ORDER    ELEMENT-WISE MULTIPLICA-TION

INVERSE TRANSFORM (FIRST HALF)

# FIG.12

INPUT VECTOR $\gamma \times k$

| x0 | x1 | x2 | x3 | x4 | x5 |
|----|----|----|----|----|----|

$\gamma$

RANDOM NUMBER VECTOR $\gamma \times k$

| a0 | a1 | a2 | a3 | a4 | a5 |
|----|----|----|----|----|----|

$\gamma$

MULTIPLE PRECISION MULTIPLICATION

| a0·x0 | | a1·x1 | | ... | | a5·x5 |

MULTIPLE PRECISION MULTIPLICATION

$$y = \sum_{i=0}^{k-1} a_i \cdot x_i \bmod p$$

MULTI-LINEAR MODULAR HASHING (MMH)

$$z = b \cdot y + c \bmod 2^{\alpha}/2^{\alpha-\beta}$$

b, c: RANDOM NUMBER VALUES

$\alpha$: INPUT LENGTH (= $\gamma$)
$\beta$: OUTPUT LENGTH

MODULAR ARITHMETIC HASHING (MH)

OUTPUT VECTOR z

EP 4 675 970 A1

# FIG.13

EXAMPLE IN WHICH B=10

$7435=7\times10^3+4\times10^2+3\times10^1+5\times10^0$

$\times$

$4271=4\times10^3+2\times10^2+7\times10^1+1\times10^0$

$\displaystyle\sum_{n=0}^{N-1} a_n B^n \quad \times \quad \sum_{n=0}^{N-1} b_n B^n$ POLYNOMIAL MULTIPLICATION

$$\sum_{n=0}^{N-1} a_n B^n \times \sum_{n=0}^{N-1} b_n B^n = \boldsymbol{a} * \boldsymbol{b} = \mathrm{INTT}\left(\mathrm{NTT}(\boldsymbol{a}) \odot \mathrm{NTT}(\boldsymbol{b})\right)$$

## FIG.14A

START

S31
READ PORTION OF INPUT VECTOR TRANSFORMED DATA

S32
READ PORTION OF RANDOM NUMBER VECTOR TRANSFORMED DATA

S33
ELEMENT-WISE MULTIPLICATION OPERATION

S34
IFFT/INTT FIRST-HALF PROCESSING

S35
WRITE AS PARTIAL DATA OF INTERMEDIATE DATA

S36
HAS PROCESSING BEEN COMPLETED FOR ALL DATA OF SIZE $\gamma$ ?

NO

YES

INVERSE TRANSFORM PROCESSING (FIRST HALF) COMPLETED

# FIG.14B

INVERSE
TRANSFORM
PROCESSING
(SECOND HALF)
COMPLETED

S37
PARTIALLY READ INTERMEDIATE
DATA

S38
IFFT/INTT SECOND-HALF
PROCESSING

S39
WRITE AS PARTIAL DATA OF
INVERSE TRANSFORM DATA

S40
HAS
PROCESSING BEEN
COMPLETED FOR ALL DATA
OF SIZE $\gamma$ ?

NO

YES

END

# FIG.15

```
┌──────────────┐   ┌──────────────┐   ┌──────────────┐
│      ⌇301    │   │      ⌇302    │   │      ⌇303    │
│   CONTROL    │   │ MAIN STORAGE │   │  AUXILIARY   │
│   DEVICE     │   │   DEVICE     │   │   STORAGE    │
│              │   │              │   │   DEVICE     │
└──────┬───────┘   └──────┬───────┘   └──────┬───────┘
       │                  │                  │          ⌇310
───────┼──────────────────┼──────────────────┼──────────────────────────
       │     ⌇304         │     ⌇305         │     ⌇306         │     ⌇307
┌──────┴───────┐   ┌──────┴───────┐   ┌──────┴───────┐   ┌──────┴───────┐
│   DISPLAY    │   │              │   │   QUANTUM    │   │  CLASSICAL   │
│   DEVICE     │   │ INPUT DEVICE │   │ COMMUNICA-   │   │ COMMUNICA-   │
│              │   │              │   │  TION IF     │   │  TION IF     │
└──────────────┘   └──────────────┘   └──────────────┘   └──────────────┘
```

| Europäisches Patentamt European Patent Office Office européen des brevets | **EUROPEAN SEARCH REPORT** | **Application Number** EP 25 18 6360 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XIANGYU WANG ET AL: "High-speed Implementation of Length-compatible Privacy Amplification in Continuous-variable Quantum Key Distribution", ARXIV.ORG, CORNELL UNIVERSITY LIBRARY, 201 OLIN LIBRARY CORNELL UNIVERSITY ITHACA, NY 14853, 7 May 2018 (2018-05-07), XP080875416, DOI: 10.1109/JPHOT.2018.2824316 * section 2, 3 * ----- | 1-10 | INV. H04L9/08 |
| A | PANDEETI GURU SATYA DATTATREYA ET AL: "Preliminary Implementation of Toeplitz Hashing on Processor, Co-Processor and SoC", 2024 16TH INTERNATIONAL CONFERENCE ON COMMUNICATION SYSTEMS & NETWORKS (COMSNETS), IEEE, 3 January 2024 (2024-01-03), pages 1040-1045, XP034547787, DOI: 10.1109/COMSNETS59351.2024.10426925 [retrieved on 2024-02-16] * section I., II. A., and II. B. * ----- | 1-10 | |
| A,D | YAN BINGZE ET AL: "An efficient hybrid hash based privacy amplification algorithm for quantum key distribution", QUANTUM INFORMATION PROCESSING, SPRINGER US, NEW YORK, vol. 21, no. 4, 31 March 2022 (2022-03-31), XP037776325, DOI: 10.1007/S11128-022-03462-4 [retrieved on 2022-03-31] * section 1, 4 * ----- | 1-10 | **TECHNICAL FIELDS SEARCHED (IPC)** H04L |

The present search report has been drawn up for all claims

| Place of search | Date of completion of the search | Examiner |
|---|---|---|
| Munich | 14 October 2025 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. LUCAMARINI** ; **K. A. PATEL** ; **J. F. DYNES** ; **B. FROHLICH** ; **A. W. SHARPE** ; **A. R. DIXON** ; **Z. L. YUAN** ; **R. V. PENTY** ; **A. J. SHIELDS**. Efficient decoy-state quantum key distribution with quantified security. *Opt. Express*, 2013, vol. 21, 24550-24565
- **D. H. BAILEY**. FFTs in External or Hierarchical Memor. *Journal of Supercomputing*, 1990, vol. 4 (1)
- **M. HAYASHI**. Exponential Decreasing Rate of Leaked Information in Universal Random Privacy. *IEEE Transactions on Information Theory*, 2011, vol. 57
- **B. YAN et al.** An efficient hybrid hash based privacy amplification algorithm for quantum key distribution. *Quantum Inf Process*, 2022, vol. 21, 130
- **W. LI et al.** High-rate quantum key distribution exceeding 110 Mb s-1. *Nature Photonics*, 2023, vol. 17, 416-421